# EUROPEAN PATENT APPLICATION

(11) **EP 4 130 790 A1**
(43) Date of publication of application: **08.02.2023**
(21) Application number: 21190053.5
(22) Date of filing: 06.08.2021
(51) Int. Cl.: G01S 13/42, G01S 13/86, G01S 13/931

(54) **DRIVER ASSISTANCE SYSTEM AND METHOD FOR DETERMINING A REGION OF INTEREST**

(71) Applicant: Robert Bosch GmbH, 70442 Stuttgart (DE)
(72) Inventor: Koczka, Bela Gabor, 1223 Budapest (HU); Ronyai, Zsolt, 2310 Szigetszentmiklós (HU)

(57) **Abstract**

The invention provides a driver assistance system for a vehicle, comprising an interface and a processing device. The interface is configured to receive radar data from a rear-view radar sensor of the vehicle, camera data from a camera sensor of the vehicle, and navigation data from a navigation system of the vehicle. The processing device is configured to detect an entrance ramp to a road to be entered, based on the camera data and the navigation data, and to determine a region of interest associated with the radar data. The processing device is further configured to automatically adjust the region of interest associated with the radar data based on the detection of the entrance ramp.

## Description

The present invention relates to a driver assistance system for a vehicle and a method for determining a region of interest associated with radar data of a rear-view radar sensor of a vehicle.

### Prior Art

Modern vehicles come equipped with a blind spot monitor for detecting other vehicles approaching from the driver's rear or side. The vehicles are detected based on sensor data, for instance camera or radar data.

The sensor data can also be used for a cross traffic alert function. For example, when the vehicle is backing out of a parking space, a warning signal can be given to the driver if traffic is approaching from a blind spot area.

For providing the required sensor data, vehicles can comprise rear-view radar sensors, having a field of view that covers at least part of the region behind the vehicle. The radar sensors are firmly mounted in the vehicle and typically have a predefined field of view. The sensor data therefore always refers to a fixed region visible to the radar sensor.

For object detection and tracking, a region of interest can be defined. The radar data can be pre-processed to detect objects in the region of interest. The object can be classified and tracked over a certain period of time.

The region of interest may be defined as a fixed region inside the field of view of the radar sensor. As long as the vehicle is driving on a straight road, all relevant objects may be identified based on the region of interest. However, in some situations, objects can be outside the fixed region of interest. For example, if the vehicle is driving towards or on an entrance ramp, the road to be entered intersects with the entrance ramp at a nonzero angle. Vehicles driving on the road to be entered appear in a marginal region of the field of view of the radar sensor. These vehicles are therefore generally outside the region of interest. Accordingly, the vehicles may not be identified early enough or not at all.

### Disclosure of the Invention

The invention provides a driver assistance system and method for determining a region of interest associated with radar data of a rear-view radar sensor of a vehicle as recited in the independent claims.

Preferred embodiments are set out in the dependent claims.

According to a first aspect, the invention provides a driver assistance system for a vehicle, comprising an interface and a processing device. The interface is configured to receive radar data from a rear-view radar sensor of the vehicle, camera data from a camera sensor of the vehicle, and navigation data from a navigation system of the vehicle. The processing device is configured to detect an entrance ramp to a road to be entered, based on the camera data and the navigation data, and to determine a region of interest associated with the radar data. The processing device is further configured to automatically adjust the region of interest associated with the radar data based on the detection of the entrance ramp.

According to a second aspect, the invention provides a method for determining a region of interest associated with radar data of a rear-view radar sensor of a vehicle. An entrance ramp to a road to be entered is detected, based on camera data of a camera sensor of the vehicle and based on navigation data of a navigation system of the vehicle. The region of interest associated with the radar data is determined, wherein the region of interest associated with the radar data is automatically adjusted based on the detection of the entrance ramp.

### Advantages of the invention

The invention provides a way to adjust the region of interest automatically in case the vehicle is driving towards or on an entrance ramp to another road. The other road can be a highway. In such driving situations, the region of interest can be adjusted in a way that the road to be entered is covered by the region of interest. Accordingly, vehicles driving on the road to be entered are identified easier and at an earlier stage. The detection results can be used by the driver assistance system to react earlier to possibly dangerous situations.

According to an embodiment of the driver assistance system, the processing device is further configured to adjust an azimuth angle of a center of the region of interest associated with the radar data based on the detection of the entrance ramp. The center of the region of interest can be associated with a virtual optical axis that would correspond to a radar sensor acquiring only radar data from the region of interest. Said virtual optical axis can be adjusted in an azimuth direction by changing the orientation (or azimuth angle) of the virtual optical axis. By adjusting the azimuth angle, the region of interest can be shifted to regions covering at least part of a side-region of the vehicle. Thereby, the road to be entered can be better analyzed.

According to an embodiment of the driver assistance system, the processing device is further configured to align the azimuth angle of the center of the region of interest associated with the radar data with an azimuth angle of the main axis of the vehicle, if no entrance ramp is detected. In this case, the virtual optical axis points in the backwards direction with respect to the vehicle. This situation corresponds to an unadjusted operation modus (first modus) and is perfect for driving along a straight road. All objects behind the vehicle can be detected based on the radar data.

According to an embodiment of the driver assistance system, the processing device is further configured to shift the azimuth angle of the center of the region of interest associated with the radar data towards the road to be entered, if the entrance ramp is detected. This situation corresponds to an adjusted operation modus (second modus) and is perfect for driving towards or on the entrance ramp. The region of interest shifts towards the road to be entered. This takes into consideration that the region directly behind the vehicle on the entrance ramp itself is less important as compared to the region of the road to be entered. By shifting the azimuth angle towards the road to be entered, vehicles on the road to be entered are located inside the region of interest.

According to an embodiment of the driver assistance system, the processing device is further configured to determine an intersection angle of the entrance ramp with the road to be entered, based on the camera data and the navigation data. The processing device automatically adjusts the region of interest based on the determined intersection angle. For example, the azimuth angle can be adjusted proportional to the intersection angle. In this case, the road to be entered is inside the region of interest.

According to an embodiment of the driver assistance system, the processing device is further configured to adjust the region of interest in a way that a virtual optical axis of the radar sensor associated with the region of interest is aligned with (i.e. parallel to) the road to be entered. By adjusting the region of interest in this way, the road to be entered is inside the region of interest.

According to an embodiment of the driver assistance system, the processing device is further configured to extract radar data associated with the region of interest from the received radar data. For example, the driver assistance system can detect objects, e.g. vehicles, in the region of interest. Based on the detection result, the driver assistance system can provide a signal to a driver of the vehicle. For example, the driver assistance system can provide a warning signal if a vehicle driving on the road to be entered is detected in close proximity to the entrance ramp. The driver can be warned of possible collisions. Further, the driver assistance system may control functions of the vehicle, such as accelerating or decelerating the vehicle based on the detection results.

According to an embodiment of the driver assistance system, the processing device is further configured to continuously or stepwise adjust the region of interest associated with the radar data while the vehicle is driving on the entrance ramp. For example, the azimuth angle can be adjusted continuously or in a stepwise manner to align the virtual optical axis with the road to be entered. Preferably, the road to be entered is always located in a central region of the region of interest.

According to an embodiment of the method for determining a region of interest associated with radar data of a rear-view radar sensor of the vehicle, the camera data is camera data of a front video camera sensor of the vehicle. Using the camera data of the front video camera sensor, the driver assistance system may detect that the vehicle is driving on an entrance ramp or driving towards an entrance ramp. Further, the intersection angle with the road to be entered can be determined based on the camera data of the front video camera sensor of the vehicle.

According to an embodiment, the method for determining a region of interest associated with radar data of a rear-view radar sensor of the vehicle further comprises the step of adjusting an azimuth angle of a center of the region of interest associated with the radar data based on the detection of the entrance ramp.

Short description of the drawings
- Figure 1: shows a block diagram of a driver assistance system for a vehicle according to an embodiment of the invention;
- Figure 2: shows an exemplary driving situation for illustrating the operating principle of the driver assistance system according to the embodiment of the invention; and
- Figure 3: shows a flow diagram of a method for determining the region of interest associated with the radar data of a rear-view radar sensor of a vehicle according to an embodiment of the invention.

### Description of the embodiments

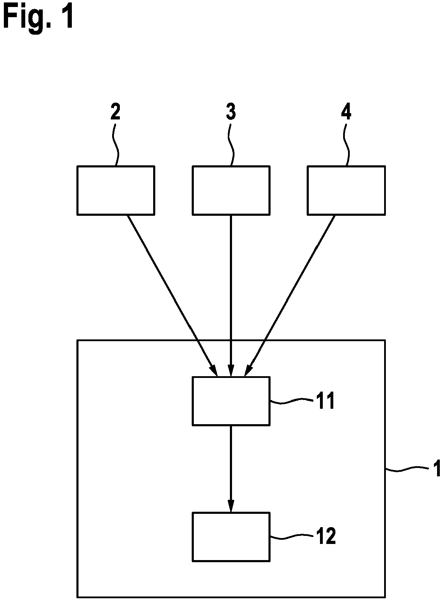

Figure 1 shows a block diagram of a driver assistance system 1 for a vehicle. The driver assistance system 1 comprises an interface 11 and a processing device 12. The interface 11 is coupled to a rear-view radar sensor 2 of the vehicle, a camera sensor 3 of the vehicle and a navigation system 4 of the vehicle.

The rear-view radar sensor 2 is arranged at a rear end of the vehicle and has a field of view which covers at least part of the region behind the vehicle. The rear-view radar sensor 2 emits radar signals and receives the radar signals after reflection on objects in the surrounding of the vehicle. Based on the received radar signals, the rear-view radar sensor 2 generates radar data.

The camera sensor 3 can be a front video camera which is arranged at a front portion of the vehicle. The camera sensor 3 generates images or videos of a region in front of the vehicle and provides camera data.

The navigation system 4 can comprise a GPS device for receiving GPS data. The navigation system 4 can also comprise a memory with map data. The navigation system 4 provides navigation data that can include at least one of the current position of the vehicle, the position of a destination the vehicle is driving to, map data, traffic data, or the like.

The interface 11 can be coupled to a rear-view radar sensor 2 of the vehicle, a camera sensor 3 of the vehicle and a navigation system 4 of the vehicle by a communication bus, e.g. a CAN bus. The interface 11 receives radar data from the rear-view radar sensor 2 of the vehicle, camera data from the camera sensor 3 of the vehicle, and navigation data from the navigation system 4 of the vehicle. The received radar data, camera data and navigation data are provided to the processing device 12. The processing device 12 may comprise at least one memory for storing the received radar data, camera data and navigation data and for storing program instructions for processing the data.

The processing device 12 further comprises at least one microprocessor, integrated circuit or the like for processing the received radar data, camera data and navigation data.

The processing device 12 may process the camera data using image processing methods to detect objects and structures in the surrounding of the vehicle. The processing device 12 can detect an entrance ramp to a road to be entered. For example, the processing device 12 may detect the presence of an intersection of the entrance ramp and the road to be entered. The processing device 12 may also identify traffic signs to detect the entrance ramp.

The processing device 12 may further detect the entrance ramp based on the navigation data. For example, based on GPS data and map data, the processing device 12 detects that the current position of the vehicle is moving towards an entrance ramp.

When the vehicle is driving on the entrance ramp, the processing device 12 can determine the current position of the vehicle on the entrance ramp, based on the camera data and the navigation data. For example, the processing device 12 may determine the current distance to the intersection point of the entrance ramp and the road to be entered.

The processing device 12 further processes the radar data. The processing device 12 may determine at least one region of interest corresponding to a spatial region in the field of view of the radar sensor 2. For example, when the vehicle is driving on a straight road, the region of interest may correspond to a central region of the field of view of the radar sensor 2.

The processing device 12 automatically adjusts the region of interest associated with the radar data based on the detection of the entrance ramp. For example, the processing device 12 can adjust an azimuth angle of a center of the region of interest associated with the radar data based on the detection of the entrance ramp. The processing device 12 may shift the azimuth angle of the center of the region of interest associated with the radar data towards the road to be entered, if the entrance ramp is detected.

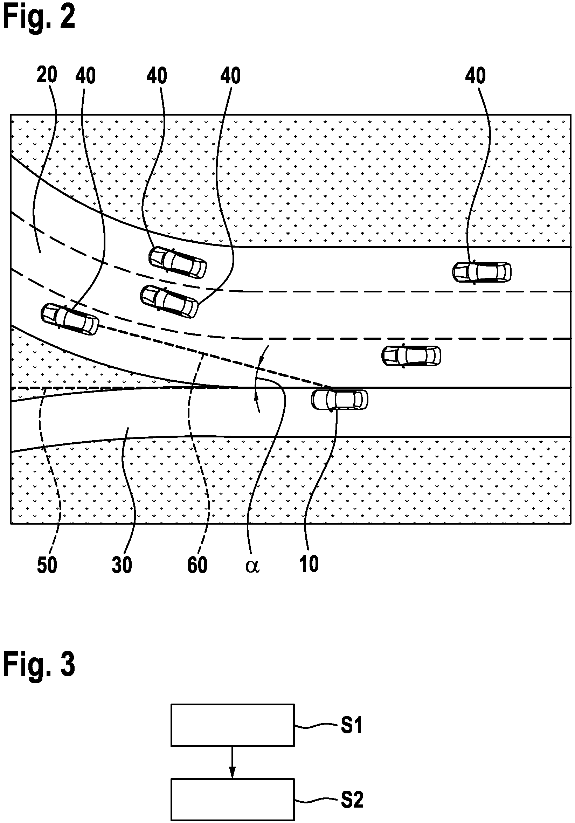

Figure 2 shows an exemplary driving situation for illustrating the operating principle of the driver assistance system 1. Herein, a vehicle 10 is driving on an entrance ramp 30 to a road 20 to be entered. On the road 20 to be entered, several further vehicles 40 are driving. The entrance ramp 30 and the road 20 to be entered meet at an intersection angle α. The processing device 12 may determine the intersection angle α of the entrance ramp 30 with the road 20 to be entered, based on the camera data and the navigation data. For example, the intersection angle α may be part of the navigation data, e.g. prestored in the map data. The processing device 12 may also determine the intersection angle α based on the camera data, using image processing methods.

The processing device 12 automatically adjusts the region of interest based on the determined intersection angle α. For example, an azimuth angle can be adjusted proportional to the intersection angle α. Herein, the azimuth angle corresponds to an angle of a virtual optical axis 60 with respect to the main axis 50 of the vehicle in an azimuth direction. The processing device 12 may also adjust the region of interest in a way that the virtual optical axis 60 of the radar sensor 2 associated with the region of interest is aligned with the road 20 to be entered. The processing device may continuously shift the region of interest such that the region of interest is always aligned with the road 20 to be entered.

The processing device 12 may also adjust the region of interest such that the road 20 to be entered appears essentially centered within the reduced field of view associated with the region of interest.

Figure 3 shows a flow diagram of a method for determining a region of interest associated with the radar data of a rear-view radar sensor 2 of a vehicle. The numbering of process steps is for clarity and is generally not intended to imply any particular chronological order. In particular, several process steps can also be carried out simultaneously.

In a first method step S1, an entrance ramp 30 to a road 20 to be entered is detected, based on camera data of a camera sensor 2 of the vehicle and based on navigation data of a navigation system 3 of the vehicle.

In a second step S2, a region of interest associated with the radar data is determined, wherein the region of interest associated with the radar data is automatically adjusted based on the detection of the entrance ramp 30. The region of interest may be adjusted in a way that a virtual optical axis 60 of the radar sensor 2 associated with the region of interest is aligned with the road 20 to be entered.

An azimuth angle of a center of the region of interest associated with the radar data may be adjusted based on the detection of the entrance ramp 30.

The region of interest associated with the radar data can be continuously or stepwise adjusted while the vehicle 10 is driving on the entrance ramp 30.

## Claims

1. A driver assistance system (1) for a vehicle (10), comprising:
an interface (11) configured to receive radar data from a rear-view radar sensor (2) of the vehicle (10), camera data from a camera sensor (3) of the vehicle (10), and navigation data from a navigation system (4) of the vehicle (10); and
a processing device (12) configured to detect an entrance ramp (30) to a road (20) to be entered, based on the camera data and the navigation data, and to determine a region of interest associated with the radar data;
wherein the processing device (12) is configured to automatically adjust the region of interest associated with the radar data based on the detection of the entrance ramp (30).

2. The driver assistance system (1) according to claim 1, wherein the processing device (12) is further configured to adjust an azimuth angle (α) of a center of the region of interest associated with the radar data based on the detection of the entrance ramp (30).

3. The driver assistance system (1) according to claim 2, wherein the processing device (12) is further configured to align the azimuth angle (α) of the center of the region of interest associated with the radar data with an azimuth angle of the main axis (50) of the vehicle (10), if no entrance ramp (30) is detected, and
wherein the processing device (12) is further configured to shift the azimuth angle (α) of the center of the region of interest associated with the radar data towards the road (20) to be entered, if the entrance ramp (30) is detected.

4. The driver assistance system (1) according to any of the preceding claims, wherein the processing device (12) is further configured to:
determine an intersection angle (α) of the entrance ramp (30) with the road (20) to be entered, based on the camera data and the navigation data, and
to automatically adjust the region of interest based on the determined intersection angle (α).

5. The driver assistance system (1) according to any of the preceding claims, wherein the processing device (12) is further configured to adjust the region of interest in a way that a virtual optical axis (60) of the radar sensor (2) associated with the region of interest is aligned with the road (20) to be entered.

6. The driver assistance system (1) according to any of the preceding claims, wherein the processing device (12) is further configured to extract radar data associated with the region of interest from the received radar data.

7. The driver assistance system (1) according to any of the preceding claims, wherein the processing device (12) is further configured to continuously or stepwise adjust the region of interest associated with the radar data while the vehicle (10) is driving on the entrance ramp (30).

8. A method for determining a region of interest associated with radar data of a rear-view radar sensor (2) of a vehicle (10), comprising the steps:
detecting (S1) an entrance ramp (30) to a road (20) to be entered, based on camera data of a camera sensor (3) of the vehicle (10) and based on navigation data of a navigation system (4) of the vehicle (10); and
determining (S2) the region of interest associated with the radar data, wherein the region of interest associated with the radar data is automatically adjusted based on the detection of the entrance ramp (30).

9. The method according to claim 8, wherein the camera data is camera data of a front video camera sensor (3) of the vehicle (10).

10. The method according to claim 8 or 9, further comprising adjusting an azimuth angle (α) of a center of the region of interest associated with the radar data based on the detection of the entrance ramp (30).
